# EUROPEAN PATENT SPECIFICATION

(11) **EP 1 645 154 B1**
(45) Date of publication and mention of the grant of the patent: **17.03.2010**
(21) Application number: 04725410.7
(22) Date of filing: 02.04.2004
(51) Int. Cl.: H04W 4/22

(54) **CALL ROUTING AND CORRESPONDING UPDATING OF ROUTING INFORMATION**
ROUTEN VON ANRUFEN UND ENTSPRECHENDE AKTUALISIERUNG VON ROUTINGINFORMATION
ACHEMINEMENT D'APPELS ET MISE A JOUR D'INFORMATION DE ROUTAGE

(30) Priority: 27.06.2003 US 483257 P
(43) Date of publication of application: 12.04.2006
(73) Proprietor: Nortel Networks Limited, St Laurent, Québec H4S 2A9 (CA)
(72) Inventor: WARREN, Daniel, Wokingham Berdshire, RG40 4UG (GB); GARAPATY, Sonia, Dallas, TX 75252 (US)
(74) Representative: Bird, Ariane
(86) International application number: PCT/GB2004/001438
(87) International publication number: WO 2005/004521

(56) References cited:
- WO-A-98/00988
- WO-A-02/056624
- WO-A-03/037026
- WO-A-03/045100
- "Universal Mobile Telecommunications System (UMTS);Stage 2 Functional Specification of UE Positioning in UTRAN (3GPP TS 25.305 version 4.0.0 Release 4)" ETSI TS 125 305 V4.0.0, XX, XX, March 2001 (2001-03), pages 1-50, XP002215742

## Description

### FIELD OF THE INVENTION

This invention relates to methods and apparatus for call routing. The invention particularly relates to routing of calls, such as emergency calls, which are routed based on the location of a mobile subscriber in a cellular wireless network.

### BACKGROUND TO THE INVENTION

When a mobile subscriber within a wireless network makes an emergency call, that call must be routed to an emergency call handling centre which is close to the subscriber to ensure that the relevant emergency services can be deployed to the location of the subscriber quickly.

Currently, when routed according to the location of the subscriber, emergency calls are routed based on the cell in which the mobile subscriber is located. However, as the emergency call handling centre boundaries are often not aligned with the cell boundaries of the wireless network, many cells are covered by more than one emergency call handling centre. Routing by cell, therefore results in a large number of calls (over 30% in US) being routed to an emergency call handling centre which is not the closest one to the location of the subscriber. This can result in delay in the arrival of the emergency services at an incident which in turn may have very serious consequences.

The Publication WO 9800988 A2 discloses that a position information regarding a mobile station is determined and provided upon request. In one situation, mobile station position is determined in response to a request from another mobile subscriber and displayed on the requesting mobile station display. Mobile station position is also determined in response to a request from a land line user and provided through either a synthesized voice communication, a data message or a facsimile message. Mobile station positions are further provided in response to law enforcement and other public service entity requests. In another instance mobile station location information is used to insure routing of emergency calls to the proper public safety answering point associated to a cell.

The publication WO 02056624 A2 teaches that in order to accelerate the specification of a location during the sending of an emergency call of a mobile telecommunications device, the position of the respective mobile telecommunications device is determined prior to the sending of the call and/or independently of the mobile telecommunications network and is transmitted when the emergency call is sent.

### OBJECT TO THE INVENTION

The invention seeks to provide a call routing method which mitigates at least one of the problems of known methods.

### SUMMARY OF THE INVENTION

According to a first aspect of the invention there is provided a method of routing calls in a communications network comprising the steps of: at a first network node, receiving location information relating to a subscriber originating a call; at said first network node, determining initial routing information based on said location information; sending said location information from said first network node to a second network node; at said second network node, determining based an said location information of zone in which said subscriber is located in a cell of a wireless network and updated routing information based on said zone; sending said updated routing information from said second network node to said first network node; and at said first network node, routing said call based on said updated routing information.

An advantage of this is that by obtaining precise updated routing information before routing the call, the call can be routed more accurately. For example, where the call is an emergency call, instead of routing based on the cell in which the subscriber is located (i.e. according to the initial routing information), the call can be routed according to where the subscriber is located within the cell (i.e. according to the updated routing information). This removes the problem which exists when a single cell is covered by more than one emergency call handling centre and ensures that the call is routed to the closest emergency call handling centre to the subscriber. This is particularly important where the call is an emergency call as additional delay in the arrival of the emergency services at an incident can have very serious consequences.

The method may further comprise the step of: indicating to said second network node that said first network node is capable of receiving said updated routing information.

The method may further comprise the step of: sending said initial routing information from said first network node to said second network node.

An advantage of this is that it enables the second network node to determine whether updated routing information, (e.g. updated routing parameters) is required.

The initial routing information may include the initial NA-ESRK.

The updated routing information may include the updated NA-ESRK.

The call may be an emergency call.

Accurate routing is particularly advantageous where the call is an emergency call. The additional information may provide more accurate information regarding which emergency call handling centre the call should be routed to. If inaccurate information, or information which is not specific or detailed enough is used to route the call, it may be routed to the wrong emergency call handling centre which would result in a delay in the deployment of the emergency services to the incident.

The first network node may be a Mobile services Switching Centre.

The second network node may be a Gateway Mobile Location Centre.

An advantage of determining the updated routing information at the Gateway Mobile Location Centre rather than at another node e.g. the Mobile services Switching Centre, is that the Gateway Mobile Location Centre is designed to interpret location information. The Mobile services Switching Centre is designed to route calls and if it was to additionally include the ability to determine updated routing information this would result in a considerable increase in the complexity and cost of the Mobile services Switching Centre.

The Gateway Mobile Location Centre may include a Zonal Database or similar functional entity.

The method may further comprise the step of: at said Gateway Mobile Location Centre, communicating with a Zonal Database to determine said updated routing information.

According to a second aspect of the invention there is provided a computer program for performing the method as described above.

The computer program may be stored in machine readable form.

The computer program may be on a storage medium.

The computer program may be located in a single place or it may be distributed across the network, for example, with part located at the first network node and part located at the second network node.

According to a third aspect of the invention there is provided a method of updating routing information within a communications network, said method comprising the steps of: at a second network node, receiving location information relating to a subscriber originating a call and a request for updated routing information for said call from a first network node; determining based on said location information a zone in which said subscriber is located in a cell of a wireless network and said updated routing information based on said zone; transmitting said updated routing information to said first network node.

The method may further comprise the steps of: determining whether said updated routing information is required; and transmitting one of said updated routing information and a no update required message to said second network node.

According to a fourth aspect of the invention there is provided a computer program for performing the method as described above.

According to a fifth aspect of the invention there is provided a second node in a communications network comprising: a receiver arranged to receive location information relating to a subscriber originating a call from a first node and a request for updated routing information for said call; a processor arranged to determine based on said location information a zone in which said subscriber is located in a cell of a wireless network and said updated routing information based on said zone; and a transmitter arranged to send said updated routing information to said first node.

The processor may be physically separated from said second node, and the second node may further comprise: communication links to said processor.

According to a sixth aspect of the invention there is provided a communications network comprising a second node as described above.

### BRIEF DESCRIPTION OF THE DRAWINGS

An embodiment of the invention will now be described with reference to the accompanying drawings in which:
Figure 1 is a schematic diagram of a wireless network;
Figure 2 is a schematic diagram of a wireless network;
Figure 3 shows a known message flow between a GMLC and a MSC;
Figure 4 shows a first example message flow according to the invention;
Figure 5 shows a second example message flow according to the invention;
Figure 6 shows a third example message flow according to the invention; and
Figure 7 shows a fourth example message flow according to the invention.

Common reference numerals have been used throughout the figures where appropriate.

### DETAILED DESCRIPTION OF INVENTION

Embodiments of the present invention are described below by way of example only. These examples represent the best ways of putting the invention into practice that are currently known to the Applicant although they are not the only ways in which this could be achieved.

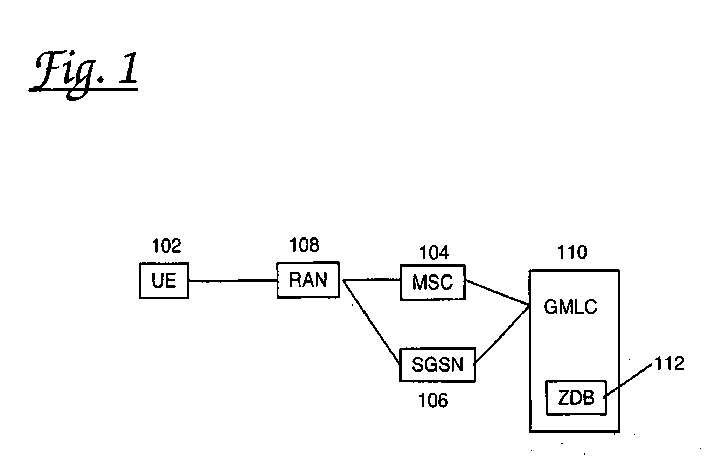

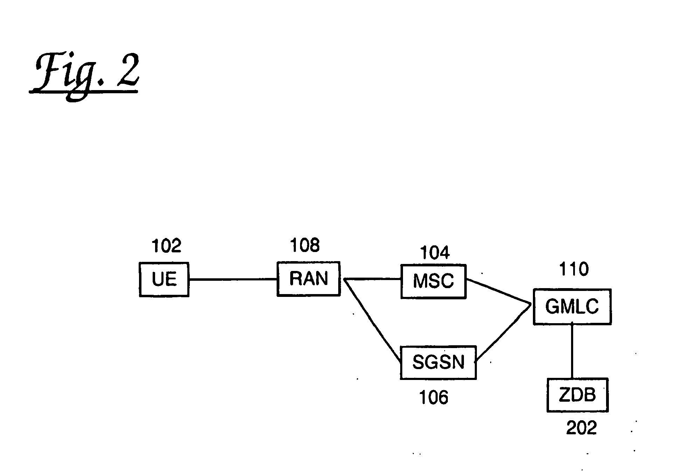

Figures 1 and 2 show schematic diagrams of wireless networks containing a number of network elements (or nodes). A subscriber to the network uses user equipment 102 (UE) such as a mobile phone which connects to either a Mobile services Switching Centre 104 (MSC) or a Serving GPRS Support Node 106 (SGSN) via a Radio Access Network 108 (RAN). The MSC is used for circuit switched services; such as voice and the SGSN is used for packet switched service such as packet data (GPRS = General Packet Radio Service). The UE is shown connected to a single RAN, however it may be able to connect to more than one RAN, for example a Universal Terrestrial RAN (UTRAN) and a GSM EDGE RAN (GERAN). The MSC and SGSN are both able to communicate with a Gateway Mobile Location Centre 110 (GMLC).

The figures and description herein refer to an MSC, however this could equally be a Visited MSC (VMSC) if the subscriber is roaming.

The GMLC is the brokering point for location based services, such as emergency calls, and can pass location information onto Location Services clients (LCSs), not shown in figures 1 and 2. Additionally the GMLC can interact with the Zonal Database 112 (ZDB), which may be integrated within the GMLC, as shown in figure 1, or be a separate entity 202 which can communicate with the GMLC, as shown in figure 2. One of the functions of the ZDB is to determine the 'zone' or network area that the subscriber is in, based upon the location of the UE communicated in the information it receives from the MSC.

Figure 1 shows the ZDB functionality embedded within the GMLC. Alternatively the ZDB functionality could be embedded within or associated with a different node in the network, for example the MSC. The two example locations of the ZDB in figures 1 and 2 may however be preferred as the GMLC is designed to interpret location information and to include this functionality in the MSC may add complexity and cost to this network element.

When a subscriber initiates an emergency call, the call is routed to an emergency call handling centre by the MSC on the basis of location or routing parameters stored at the MSC. In North America, these parameters are:
- NA-ESRK - North American Emergency Service Routing Key
- NA-ESRD - North American Emergency Service Routing Digits

NA-ESRK is a dynamically allocated value based upon the Cell-ID of the cell that the UE is attached to at the time of call origination, whilst NA-ESRD is statically allocated on the MSC.

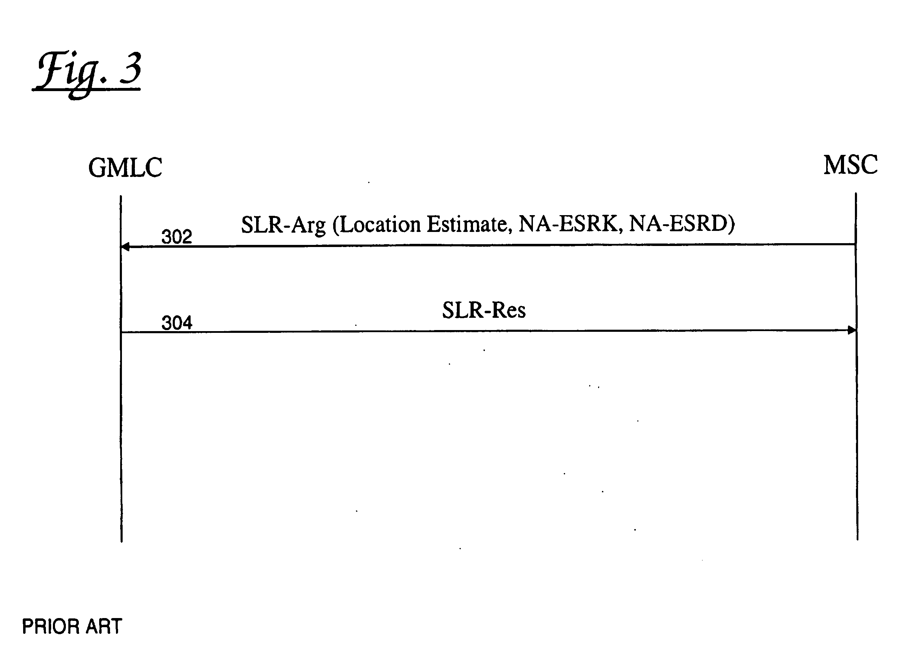

Location information which may include these parameters may also be communicated to the GMLC in a Subscriber Location Report 302 (SLR) which may also include other location information, such as a location estimate, as shown in the known message flow of figure 3. The location estimate may include the subscriber's estimated X-Y position (i.e. position according to a predefined coordinate system e.g. latitude and longitude, GPS position), which has been determined by the Radio Access Network. The GMLC will acknowledge receipt of the SLR 304 (SLR-Res) and may pass this received location information on to the emergency services via the LCS after the emergency call has been routed based on Cell-ID.

As described above, routing an emergency call based purely on the Cell-ID of the subscriber can cause non-ideal routing in a large number of cases as the boundaries of the cells are unlikely to correspond to the boundaries of the areas covered by the emergency call handling centres. Therefore it is beneficial to route the calls based on different location information. According to the invention, the MSC may invoke a location based routing procedure, as described below, before the emergency call is set up.

As described above, one of the functions of the ZDB is to accurately calculate the zone in which the UE is located based upon the information it receives from the MSC. This may be achieved through computation, via a look-up table or any other suitable technique. When the ZDB function is integrated within the GMLC, it may be referred to as the Location Client Zone Transformation Function (LCZTF). The ZDB may calculate a new value of the NA-ESRK. Dependent on the circumstances, the value may be the same or different from the original value determined from the Cell-ID by the MSC.

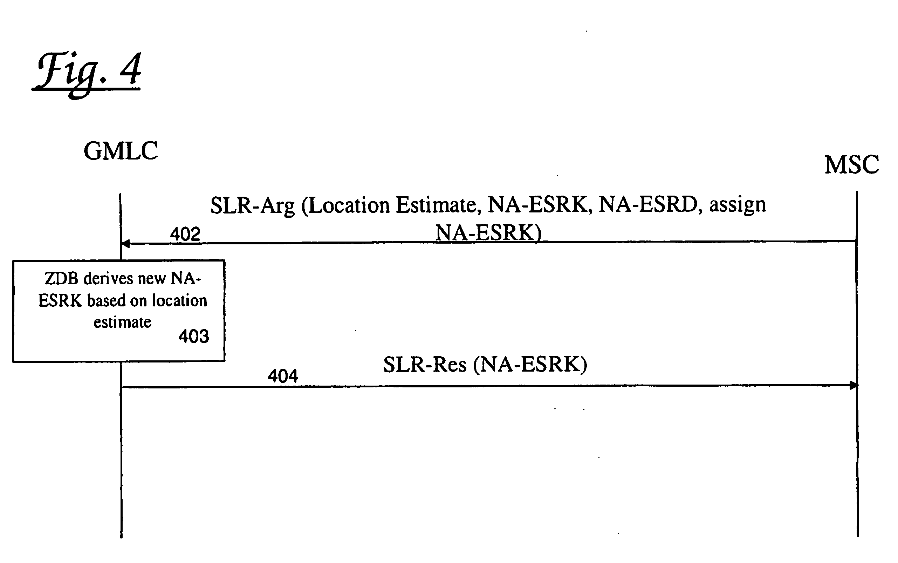

An example message flow according to the invention is shown in figure 4. When the MSC sends location information in an SLR 402 to the GMLC, the MSC indicates that it is capable of receiving updated emergency call routing information from the GMLC. This may be by way of a new flag within the SLR message (e.g. an 'assign NA-ESRK' flag). The GMLC passes the received location information to the ZDB (which may or may not be integrated within the GMLC) which derives zone information 403 which may include an updated value of the NA-ESRK. The new or updated information, for example the updated location parameters (for North America: NA-ESRK), is then communicated back to the MSC. This may be by way of including this information within the acknowledgement of receipt of the SLR 404 (SLR-Res). The MSC updates its stored location information and is able to route emergency calls based on this new information.

The information referred to herein as location information may alternatively be routing information.

Where the new location information derived by the ZDB is the same as the location information sent by the MSC, the GMLC may include this information (or parameters) in a message back to the MSC. Alternatively, the GMLC may indicate that no change is required (e.g. by a special flag in the SLR-Res or by not including any parameters). Where the ZDB is unable to calculate new location information, for example if there is a system failure, the GMLC may indicate this to the MSC (e.g. by another special flag in the SLR-Res or a dedicated result code).

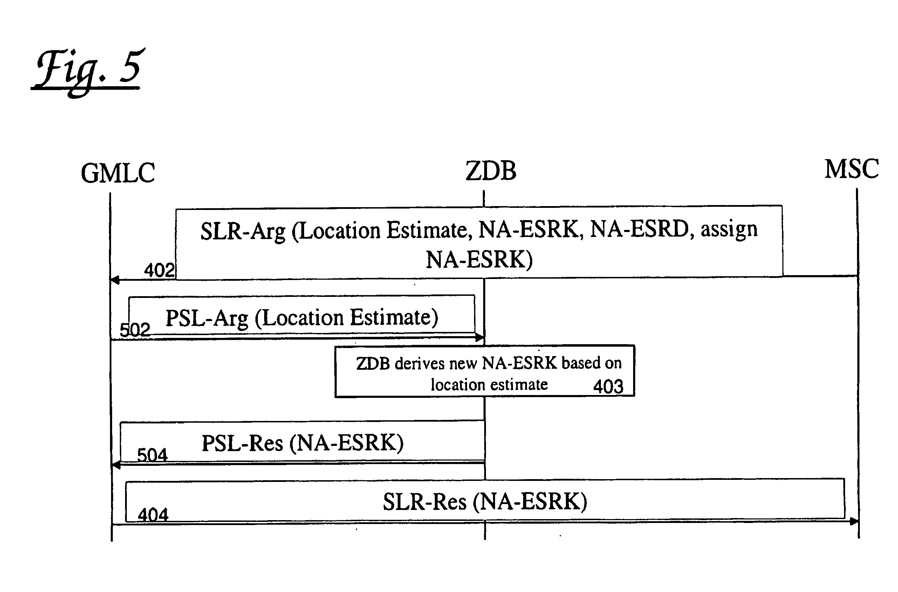

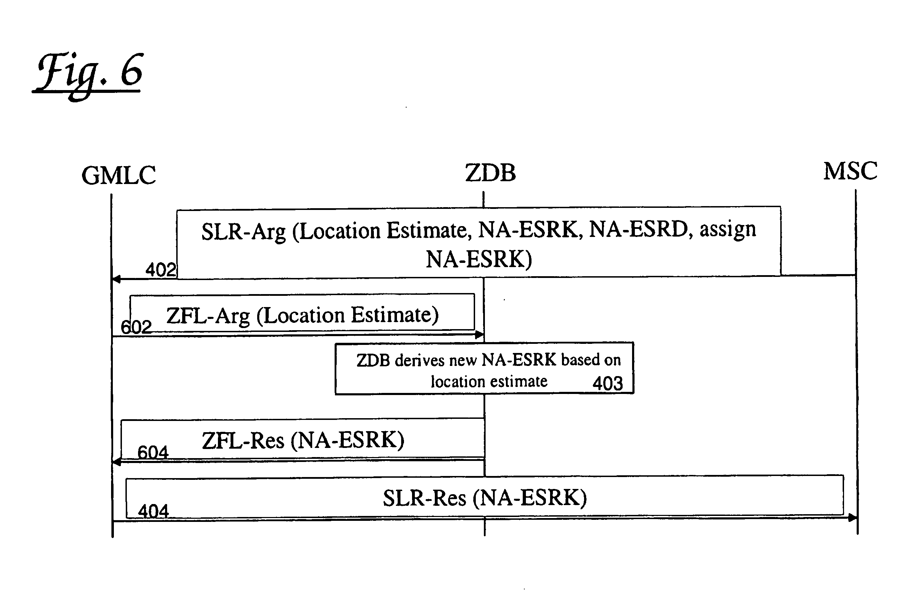

In the situation where the ZDB is not integrated within the GMLC, as shown in figure 2, it is necessary for the GMLC and ZDB to communicate in order to determine new location information for a subscriber. Two example messaging techniques are shown in figures 5 and 6.

According to a first example, shown in figure 5, an existing message format is adapted and used in a new way. A Provide Subscriber Location (PSL) message is used to communicate with the ZDB. Upon receipt of the SLR 402 from the MSC, the GMLC sends a PSL message 502 (PSL-Arg) to the ZDB. This PSL includes some or all of the location information that was received by the GMLC from the MSC e.g. the estimate of the X-Y position of the subscriber. Based on the received information, the ZDB derives new zone information 403, derives a NA-ESRK based on this zone information and communicates this to the GMLC. This information may be communicated as part of the PSL receipt acknowledgement message 504 (PSL-Res). The GMLC then communicates the new location information to the MSC to enable improved routing accuracy 404.

The PSL-Arg message may also contain a new Location Estimate Type flag (e.g. zone database interrogation) to identify that the request is intended to be for the interrogation of the ZDB should the message become misdirected.

According to a second example, shown in figure 6, a new message format is used to communicate between the GMLC and the ZDB. A Zone For Location services (ZFL) message 602 is used to send the location information received by the GMLC from the MSC to the ZDB. The ZDB derives the new location information 403, as described above, and then embeds the newly derived information into the acknowledgement message 604 (ZFL-Res) which is sent to the GMLC. The GMLC then communicates the new information to the MSC 404.

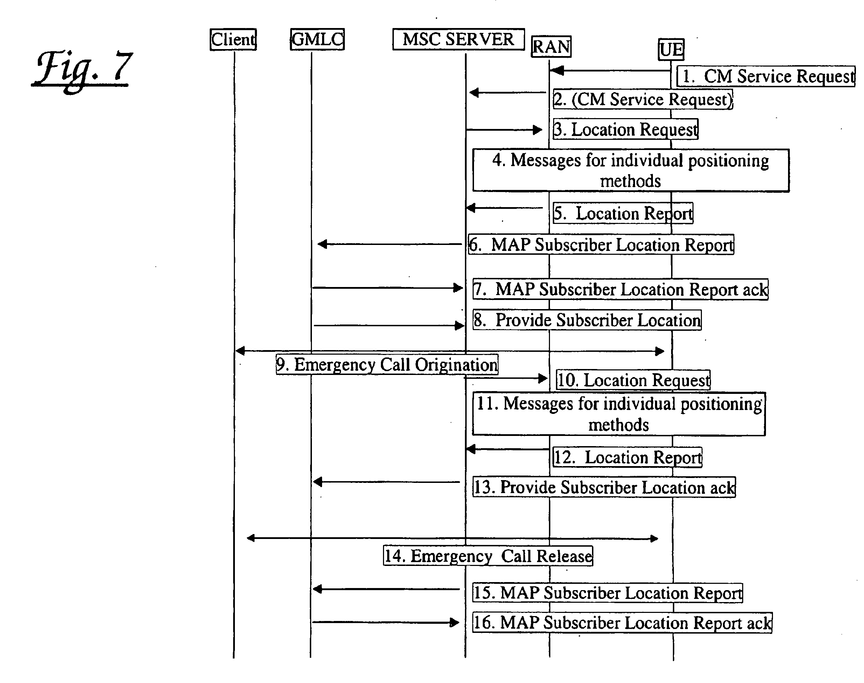

A detailed implementation of location based routing according to this invention, in particular for emergency calls in North America, is shown in figure 7.

The location based routing is dependent on either the GMLC supporting LCZTF functionality or the ZDB being present in the network and contactable by the GMLC, and upon the MSC server being able to accept a NA-ESRK from the GMLC. If either LCZTF is not supported by the GMLC or ZDB is not in the network, or the MSC does not indicate that it can accept a NA-ESRK from the GMLC, then the call is routed according to alternative procedures.

The location based routing procedure is shown in figure 7 and the steps are described in more detail below.

### Location Preparation Procedure

1) An initially idle UE requests radio connection setup indicating a request for an Emergency Service call to the MSC server via RAN.
2) RAN conveys the Connection Management (CM) service request to the core network. (Before having a CM connection there needs to be a radio connection.) The UE may identify itself using a TMSI (Temporary Mobile Subscriber Identity), IMSI (International Mobile Subscriber Identity) or IMEI (International Mobile Equipment Identity).
3) The MSC server initiates procedures to obtain the UE's location for routing the emergency call to the emergency services LCS client. The MSC server sends a Location Request message to RAN associated with the UE's current location area. This message may include the type of location information requested, the UE's location capabilities and a Quantity of Service (OoS) with low delay and low horizontal accuracy.

### Positioning Measurement Establishment Procedure

4) RAN determines the positioning method and instigates the particular message sequence for this method, for example as specified in UTRAN Stage 2, 3GPP TS 25.305 [1] and GERAN Stage 2, 3GPP TS 43.059 [16].

### Location Calculation and Release Procedure

5) When a location estimate best satisfying the requested QoS has been obtained, RAN returns it to the MSC server. If a location estimate could not be obtained, the RAN returns a location response containing a failure cause and no location estimate. If a failure is received, the MSC server initiates emergency call setup using alternative procedures.
6) The MSC server sends a Mobile Application Part (MAP) Subscriber Location Report to a GMLC associated with the emergency services provider to which the emergency call will be sent. This message may carry any location estimate returned in step 5, the age of this estimate and may also carry the MSISDN (Mobile Subscriber International Subscriber Identity Number, i.e. the telephone number), IMSI and IMEI of the calling UE. The message may also indicate the event that triggered the location report. Any NA-ESRD and NA-ESRK that was assigned by the MSC server may be included. The message may also include an indication that the MSC server supports the capability to replace NA-ESRK value with one that may be assigned by the GMLC.
7) The GMLC translates the location estimate into a zone identity and assigns a NA-ESRK. The GMLC includes the NA-ESRK value in the MAP Subscriber Location Report ack and send it to the MSC server. The GMLC stores the assigned NA-ESRK and any NA-ESRD that was sent by the MSC server in step 4.

Step 7 above assumes that the ZDB functionality is integrated within the GMLC. If the ZDB is a separate entity, between stages 6 and 7, additional messaging between the GMLC and ZDB is required, as described above in reference to figures 5 and 6.

### Location Preparation Procedure

8) At any time after step 6 or immediately after Emergency Call Origination in step 9, the GMLC may send a MAP Provide Subscriber Location message to the MSC server. This message includes a QoS with higher delay and higher horizontal accuracy required for an emergency call.
   If the GMLC is capable of determining whether the initial location satisfies the higher accuracy requirements for an emergency call, then the GMLC may not need to request for a higher accuracy location and go to step 14.
9) The emergency call procedure is applied. The MSC server, RAN and UE continue the normal procedure for emergency call origination towards the appropriate emergency services client. Call setup information sent into the PSTN (Public Switched Telephone Network) may include the UE location plus information that will enable the emergency service provider to request UE location at a later time (e.g. NA-ESRD or NA-ESRK in North America).
10) The MSC server sends a Location Request message to RAN. This message may include the type of location information requested, the UE's location capabilities and requested higher accuracy GoS.

### Positioning Measurement Establishment Procedure

11) same as step 4.

### Location Calculation and Release Procedure

12) same as step 5.
13) The MSC server returns the location information and its age to the GMLC. The GMLC stores the location information for later retrieval by the emergency services LCS client.
14) At some later time, the emergency services call is released.
15) For a North American Emergency Services call, the MSC/MSC server sends another MAP Subscriber Location Report to the GMLC. This message may include the same parameters as before except that there is no position estimate and an indication of emergency call termination is included.
16) The GMLC acknowledges the MSC server notification and may then release all information previously stored for the emergency call.

Although the above description is in terms of a 3GPP wireless network, the technique is also applicable to any communications network having mobile subscribers. The messages have been described specifically in relation to 3GPP, in particular using Mobile Application Part (MAP) protocols but other message formats and protocols may also be used.

It will be understood that the above description of a preferred embodiment is given by way of example only and that various modifications may be made by those skilled in the art within the scope of the invention as claimed in the appended claims.

## Claims

1. A method of routing calls in a communications network comprising the steps of:
at a first network node (104), receiving location information relating to a subscriber (102) originating a call;
at said first network node (104), determining initial routing information based on said location information;
sending (6) said location information from said first network node (104) to a second network node (110);
at said second network node (110), determining based on said location information a zone in which said subscriber is located in a cell of a wireless network and updated routing information based on said zone;
sending (8) said updated routing information from said second network node (110) to said first network node (104); and
at said first network node (104), routing said call based on said updated routing information.

2. A method as claimed in claim 1, further comprising the step of:
indicating to said second network node (110)that said first network node is capable of receiving said updated routing information.

3. A method as claimed in claim 1, further comprising the step of: sending said initial routing information from said first network (104) node to said second network node (110).

4. A method as claimed in claim 1, wherein said initial routing information includes an initial NA-ESRK.

5. A method as claimed in claim 1, wherein said updated routing information includes an updated NA-ESRK.

6. A method as claimed in claim 1, wherein said call is an emergency call.

7. A method as claimed in claim 1, wherein said first network node is a Mobile services Switching Centre (104).

8. A method as claimed in claim 1, wherein said second network node is a Gateway Mobile Location Centre (110).

9. A method as claimed in claim 8, wherein said Gateway Mobile Location Centre (110) includes a Zonal Database (112).

10. A method as claimed in claim 8, further comprising the stop of: at said Gateway Mobile Location Centre (110), communicating (602, 604) with a Zonal Database (112) to determine said updated routing information.

11. A computer program for performing the method as claimed in claim 1.

12. A computer program as claimed in claim 11 stored in machine readable form.

13. A computer program as claimed in claim 11 on a storage medium.

14. A method of updating routing information within a communications network, said method comprising the steps of:
at a second network node (110), receiving location information relating to a subscriber (102) originating a call and a request for updated routing information for said call from a first network node (104);
determining based on said location information a zone in which said subscriber is located in a cell of a wireless network and said updated routing information based on said zone;
transmitting (8) said updated routing information to said first network node (104).

15. A method as claimed in claim 14, further comprising the steps of:
determining whether said updated routing information is required; and
transmitting one of said updated routing information and a no update required message to said first network node (104).

16. A computer program for performing the method as claimed in claim 14.

17. A second node (110) in a communications network comprising:
a receiver arranged to receive location information relating to a subscriber (102) originating a call from a first node (104) and a request for updated routing information for said call;
a processor arranged to determine based on said location information a zone in which said subscriber is located in a cell of a wireless network and said updated routing information based on said zone; and
a transmitter arranged to send said updated routing information to said first node (104).

18. A second node as claimed in claim 17, wherein said processor is physically separated from said second node, said second node further comprising: communication links to said processor.

19. A communications network comprising second node (110) according to claim 17.

## Patentansprüche

1. Verfahren für die Leitweglenkung von Anrufen in einem Kommunikationsnetz, umfassend die folgenden Schritte:
an einem ersten Netzknoten (104) Empfangen von Standortinformationen bezüglich eines Teilnehmers (102), von dem ein Anruf ausgeht;
an dem ersten Netzknoten (104) Bestimmen der anfänglichen Leitweginformationen auf der Basis der Standortinformationen;
Senden (6) der Standortinformationen von dem ersten Netzknoten (104) zu einem zweiten Netzknoten (110);
an dem zweiten Netzknoten (110), Ermitteln auf der Basis der Standortinformationen einer Zone, in der sich der Teilnehmer in einer Zelle eines drahtlosen Netzes befindet, sowie aktualisierter Leitweginformationen auf der Basis der Zone;
Senden (8) der aktualisierten Leitweginformationen von dem zweiten Netzknoten (110) zu dem ersten Netzknoten (104); und
an dem ersten Netzknoten (104) Leitweglenken des Anrufs auf der Basis der aktualisierten Leitweginformationen.

2. Verfahren nach Anspruch 1, des Weiteren umfassend den folgenden Schritt:
Anzeigen bei dem zweiten Netzknoten (110), dass der erste Netzknoten imstande ist, die aktualisierten Leitweginformationen zu empfangen.

3. Verfahren nach Anspruch 1, des Weiteren umfassend den folgenden Schritt:
Senden der anfänglichen Leitweginformationen von dem ersten Netzknoten (104) zu dem zweiten Netzknoten (110).

4. Verfahren nach Anspruch 1, wobei die anfänglichen Leitweginformationen einen anfänglichen NA-ESRK enthalten.

5. Verfahren nach Anspruch 1, wobei die aktualisierten Leitweginformationen einen aktualisierten NA-ESRK enthalten.

6. Verfahren nach Anspruch 1, wobei der Anruf ein Notruf ist.

7. Verfahren nach Anspruch 1, wobei der erste Netzknoten eine Mobilfunk-Vermittlungsstelle (Mobile Services Switching Centre) (104) ist.

8. Verfahren nach Anspruch 1, wobei der zweite Netzknoten eine Mobilfunkvermittlungsstelle mit Netzübergang (Gateway Mobile Location Centre) (110) ist.

9. Verfahren nach Anspruch 8, wobei die Mobilfunkvermittlungsstelle mit Netzübergang (110) eine Zonendatenbank (112) enthält.

10. Verfahren nach Anspruch 8, des Weiteren umfassend den folgenden Schritt:
an der Mobilfunkvermittlungsstelle mit Netzübergang (110) Kommunizieren (602, 604) mit einer Zonendatenbank (112) zum Ermitteln der aktualisierten Leitweginformationen.

11. Computerprogramm zur Durchführung des Verfahrens nach Anspruch 1.

12. Computerprogramm nach Anspruch 11, das in einer maschinenlesbaren Form gespeichert ist.

13. Computerprogramm nach Anspruch 11 auf einem Speichermedium.

14. Verfahren zum Aktualisieren von Leitweginformationen innerhalb eines Kommunikationsnetzes, wobei das Verfahren die folgenden Schritte umfasst:
an einem zweiten Netzknoten (110), Empfangen von Standortinformationen bezüglich eines Teilnehmers (102), von dem ein Anruf ausgeht, und eine Anfrage nach aktualisierten Leitweginformationen für den Anruf von einem ersten Netzknoten (104);
Ermitteln auf der Basis der Standortinformationen einer Zone, in der sich der Teilnehmer in einer Zelle eines drahtlosen Netzes befindet, sowie der aktualisierten Leitweginformationen auf der Basis der Zone;
Senden (8) der aktualisierten Leitweginformationen zu dem ersten Netzknoten (104).

15. Verfahren nach Anspruch 14, des Weiteren umfassend die folgenden Schritte:
Bestimmen, ob die aktualisierten Leitweginformationen erforderlich sind; und
Senden entweder der aktualisierten Leitweginformationen oder einer Nachricht, dass keine Aktualisierung erforderlich ist, an den ersten Netzknoten (104).

16. Computer-Programm zur Ausführung des Verfahrens nach Anspruch 14.

17. Zweiter Knoten (110) in einem Kommunikationsnetz, umfassend:
einen Empfänger, der so angeordnet ist, dass er Standortinformationen, die sich auf einen Teilnehmer (102) beziehen, von dem ein Anruf ausgeht, von einem ersten Knoten (104) empfängt sowie eine Anfrage nach aktualisierten Leitweginformationen für den Anruf;
einen Prozessor, der angeordnet ist zum Ermitteln auf der Basis der Standortinformationen einer Zone, in der sich der Teilnehmer in einer Zelle eines drahtlosen Netzes befindet, sowie der aktualisierten Leitweginformationen auf der Basis der Zone; und
einen Sender, der zum Senden der aktualisierten Leitweginformationen an den ersten Knoten (104) angeordnet ist.

18. Einen zweiten Knoten nach Anspruch 17, wobei der Prozessor physisch von dem zweiten Knoten getrennt ist, wobei der zweite Knoten des Weiteren Folgendes umfasst:
Kommunikationsverbindungen zu dem Prozessor.

19. Kommunikationsnetz, umfassend einen zweiten Knoten (110) nach Anspruch 17.

## Revendications

1. Procédé d'acheminement d'appels dans un réseau de communication comprenant les étapes consistant à :
au niveau d'un premier noeud de réseau (104), recevoir des informations de localisation se rapportant à un abonné (102) émettant un appel ;
au niveau dudit premier noeud de réseau (104), déterminer des informations d'acheminement initiales basées sur lesdites informations de localisation ;
envoyer (6) lesdites informations de localisation en provenance dudit premier noeud de réseau (104) à un second noeud de réseau (110) ;
au niveau dudit second noeud de réseau (110), déterminer en se basant sur lesdites informations de localisation une zone dans laquelle ledit abonné est situé dans une cellule d'un réseau sans fil et des informations d'acheminement mises à jour basées sur ladite zone ;
envoyer (8) lesdites informations d'acheminement mises à jour en provenance dudit second noeud de réseau (110) audit premier noeud de réseau (104) ; et
au niveau dudit premier noeud de réseau (104), acheminer ledit appel en se basant sur lesdites informations d'acheminement mises à jour.

2. Procédé selon la revendication 1, comprenant en outre l'étape consistant à :
indiquer audit second noeud de réseau (110) que ledit premier noeud de réseau est susceptible de recevoir lesdites informations d'acheminement mises à jour.

3. Procédé selon la revendication 1, comprenant en outre l'étape consistant à :
envoyer lesdites informations d'acheminement initiales en provenance dudit premier noeud de réseau (104) audit second noeud de réseau (110).

4. Procédé selon la revendication 1, dans lequel lesdites informations d'acheminement initiales comprennent un NA-ESRK initial.

5. Procédé selon la revendication 1, dans lequel lesdites informations d'acheminement mises à jour comprennent un NA-ESRK mis à jour.

6. Procédé selon la revendication 1, dans lequel ledit appel est un appel d'urgence.

7. Procédé selon la revendication 1, dans lequel ledit premier noeud de réseau est un Centre de Commutation du Service Mobile (104).

8. Procédé selon la revendication 1, dans lequel ledit second noeud de réseau est un Centre de Localisation de Mobile Passerelle (110).

9. Procédé selon la revendication 8, dans lequel ledit Centre de Localisation de Mobile Passerelle (110) comprend une Base de données Zonale (112).

10. Procédé selon la revendication 8, comprenant en outre l'étape consistant à :
au niveau dudit Centre de Localisation de Mobile Passerelle (110), communiquer (602, 604) avec une Base de données Zonale (112) pour déterminer lesdites informations d'acheminement mises à jour.

11. Programme informatique pour effectuer le procédé selon la revendication 1.

12. Programme informatique selon la revendication 11, stocké sous une forme exploitable par une machine.

13. Programme informatique selon la revendication 11 sur un support de stockage.

14. Procédé de mise à jour d'informations d'acheminement à l'intérieur d'un réseau de communication, ledit procédé comprenant les étapes consistant à :
au niveau d'un second noeud de réseau (110), recevoir des informations de localisation se rapportant à un abonné (102) émettant un appel et une demande d'information d'acheminement mises à jour pour ledit appel en provenance d'un premier noeud de réseau (104) ;
déterminer en se basant sur lesdites informations de localisation une zone dans laquelle ledit abonné est situé dans une cellule d'un réseau sans fil et lesdites informations d'acheminement mises à jour basées sur ladite zone ;
transmettre (8) lesdites informations d'acheminement mises à jour audit premier noeud de réseau (104).

15. Procédé selon la revendication 14, comprenant en outre les étapes consistant à :
déterminer si lesdites informations d'acheminement mises à jour sont nécessaires ; et
transmettre l'une desdites informations d'acheminement mises à jour et un message en ce qu'aucune mise à jour n'est nécessaire audit premier noeud de réseau (104).

16. Programme informatique pour effectuer le procédé selon la revendication 14.

17. Second noeud (110) dans un réseau de communication comprenant :
un récepteur agencé pour recevoir des informations de localisation se rapportant à un abonné (102) émettant un appel en provenance d'un premier noeud (104) et une demande d'informations d'acheminement mises à jour pour ledit appel ;
un processeur agencé pour déterminer en se basant sur lesdites informations de localisation une zone dans laquelle ledit abonné est situé dans une cellule d'un réseau sans fil et lesdites informations d'acheminement mises à jour basées sur ladite zone ; et
un émetteur agencé pour envoyer lesdites informations d'acheminement mises à jour audit premier noeud (104).

18. Second noeud selon la revendication 17, dans lequel ledit processeur est physiquement distinct dudit second noeud, ledit second noeud comprenant en outre : des liens de communication avec ledit processeur.

19. Réseau de communication comprenant un second noeud (110) selon la revendication 17.
